(19) **Europäisches Patentamt European Patent Office Office européen des brevets**

(11) **EP 1 776 786 B1**

(12) **FASCICULE DE BREVET EUROPEEN**

(45) Date de publication et mention de la délivrance du brevet:
**12.12.2007 Bulletin 2007/50**

(21) Numéro de dépôt: **05797585.6**

(22) Date de dépôt: **09.08.2005**

(51) Int Cl.:
*H04B 10/155* (2006.01)

(86) Numéro de dépôt international:
**PCT/FR2005/050662**

(87) Numéro de publication internationale:
**WO 2006/018589 (23.02.2006 Gazette 2006/08)**

(54) **GENERATEUR IMPULSIONNEL PROGRAMMABLE ELECTRIQUEMENT ET NOTAMMENT UN GENERATEUR IMPULSIONNEL DE PROFILS DE PHASE ET D'INTENSITE DE TRES HAUTE RESOLUTION**

ELEKTRISCH PROGRAMMIERBARER IMPULSGENERATOR, INSBESONDERE EIN PHASENPROFIL- UND HÖCHSTAUFLÖSUNGSINTENSITÄTSGENERATOR

PULSE ELECTRICALLY PROGRAMMABLE GENERATOR, IN PARTICULAR A PHASE PROFILES AND A VERY HIGH-RESOLUTION INTENSITY GENERATOR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.08.2004 FR 0451834**

(43) Date de publication de la demande:
**25.04.2007 Bulletin 2007/17**

(73) Titulaire: **COMMISSARIAT A L'ENERGIE ATOMIQUE 75015 Paris (FR)**

(72) Inventeur: **JOLLY, Alain F-33510 ANDERNOS LES BAINS (FR)**

(74) Mandataire: **Poulin, Gérard et al Brevatome 3, rue du Docteur Lancereaux 75008 Paris (FR)**

(56) Documents cités:
**EP-A- 1 349 311          WO-A-01/80507 US-A1- 2004 136 724**

- KHRUSHCHEV I Y ET AL: "MULTIWAVELENGTH PULSE SOURCE FOR OTDM/WDM APPLICATIONS BASED ON ARRAYED WAVEGUIDE GRATING" IEEE PHOTONICS TECHNOLOGY LETTERS, IEEE INC. NEW YORK, US, vol. 11, no. 12, décembre 1999 (1999-12), pages 1659-1661, XP000926817 ISSN: 1041-1135

**Description**

**DOMAINE TECHNIQUE**

L'invention concerne un générateur impulsionnel programmable électriquement et notamment un générateur impulsionnel de profils de phase et d'intensité de très haute résolution.

L'objet de l'invention est de permettre la génération de profils temporels d'impulsions totalement arbitraires, associées à des profils de phase ou d'intensité à très haute résolution temporelle et à grande dynamique. Le domaine des résolutions accessibles avec l'invention est très large, et permet notamment d'obtenir des impulsions de durées situées entre la picoseconde (voire moins) et plus de 100 ns.

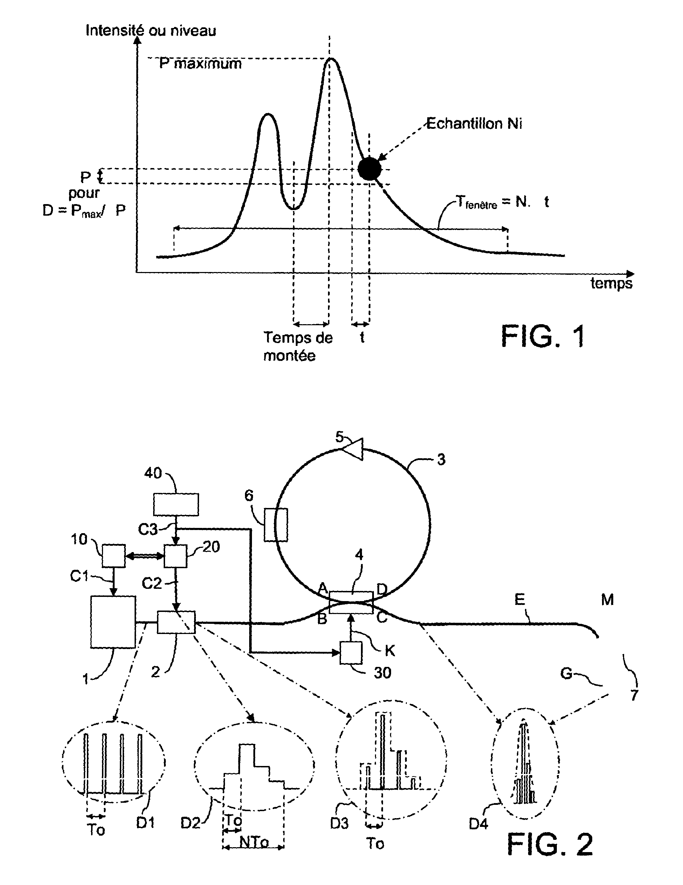

Qu'il s'agisse d'impulsions de natures électrique, optique ou autre, la génération de profils de forme quelconque est généralement possible dans des limites données et fixées par la technologie. La résolution temporelle ($\delta t$), qui détermine l'intervalle de temps le plus petit sur lequel on peut faire varier d'une quantité donnée le niveau du signal ($\Delta P$) à l'intérieur de l'impulsion constitue la première de ces limites. L'inverse de la quantité $\Delta P$, dont on souhaite généralement qu'elle soit une fraction aussi petite que possible de la valeur du signal crête (Pmax) dans l'impulsion, détermine la dynamique (D) de modulation. Cette dynamique est dans tous les cas limitée par le rapport bruit sur signal, les effets de non linéarité et le codage de la variation de signal $\Delta P$. Les trois grandeurs fondamentales dans la quantification des performances d'un dispositif de mise en forme programmable (figure 1) sont :

- la dynamique D = Pmax/$\Delta P$ que l'on cherche toujours à rendre maximale,
- la résolution temporelle $\delta t$ déterminant l'intervalle de temps défini ci-dessus et que l'on cherche à rendre optimale,
- le nombre d'échantillons N à l'intérieur d'une fenêtre de mise en forme de durée $T_{fenêtre} = N.\delta t$ et que l'on cherche à rendre maximal.

L'état de l'art dans le domaine des technologies optoélectroniques pour la mise en forme d'impulsions optiques et/ou électriques inclut différentes approches, en fonction du domaine d'application concerné.

Par exemple, le document "National Ignition Facility Front end Laser System", by S.C. Burkhart et al., Solid State Lasers for Application to Inertial Confinement Fusion Conference, proceedings p. 48, Monterey - CA, 3 1 May-2 June 1995, décrit un système où deux lignes hyperfréquences à micro-rubans peuvent être couplées entre elles de manière distribuée, selon une série de sections élémentaires à base de transistors du type GaAs FET, pour générer une forme d'impulsion arbitraire et programmable. La première des deux lignes est celle qui sert à la distribution d'une impulsion électrique courte et intense, et la seconde est une ligne de combinaison (ou de sommation) des échantillons électriques produits séquentiellement. Le substrat utilisé pour l'implantation des lignes est un substrat hyperfréquences à faibles pertes diélectriques, et les lignes sont structurées avec une impédance caractéristique spatialement variable. Chacun des transistors est pré-polarisé à l'aide d'une tension continue Vi, et présente une résistance équivalente fonction de la valeur de la tension Vi. Le transfert d'énergie électrique au travers d'un transistor donné génère un échantillon de tension sur la ligne de sommation, qui est appliqué sur la charge de la seconde ligne à un instant caractéristique donné fonction de la vitesse de propagation sur cette ligne et de la position du transistor. La résolution $\delta t$ est définie par la plus petite des deux valeurs de temps que sont la durée d'impulsion électrique au déclenchement et l'écart de temps de propagation sur les deux lignes, entre deux points de couplage successifs. La sommation dans le temps des échantillons de tensions produits par chacun des transistors génère un peigne d'impulsions électriques inscrits dans une enveloppe dont le profil est ajusté à la demande. Une difficulté dans ce type de dispositif est la nécessité d'un étalonnage très précis de l'ensemble de la structure électrique, compte tenu de ce que l'intensité d'un échantillon donné est une fonction de l'ensemble des N valeurs de tension Vi. Cela signifie que chaque échantillon ne peut être défini indépendamment des autres. Un grand nombre de points est possible avec ce principe, par association de plusieurs cartes électroniques qui doivent alors être parfaitement équilibrées en temps de propagation et en niveaux de tension. Cette technologie permet d'obtenir des résolutions dans la gamme $\delta t$=150 à 200 ps typiquement. Mais des valeurs $\delta t$ plus petites sont difficilement envisageables en raison des effets de dispersion électrique sur les lignes à micro-rubans, qui sont très limitatifs. Les temps de montée se situent également dans la gamme 150 à 200 ps, et la démonstration des performances d'un système basé sur N=300 échantillons équi-répartis sur une impulsion de durée 30 ns ($\delta t$ effectif >200 ps en pratique) a été effectuée dans une gamme d'impulsions électriques dont la tension crête atteint 5 volts crête.

Selon une autre technologie décrite dans le document Technologie «Aperture Coupled Striplines», in Quaterly reports LLE Rochester (application sur OMEGA), deux lignes hyperfréquences sont couplées continûment via une ouverture ajustable, de profil spatialement variable. Le profil des impulsions, électriques, peut alors être modifié dans une gamme de gabarits relativement large, mais ne présente pas le degré de flexibilité du système précédent. En particulier, chacun des points du profil ne peut être adressé de manière directe et un calcul inverse est nécessaire au préalable, pour chaque profil à générer. Par contre, les performances en temps de montée sont légèrement supérieures aux précédentes, et se situent aux alentours de 100 ps pour des durées d'impulsions de quelques nanosecondes.

Comme précédemment, la valeur minimale de $\delta t$ est limitée par la technologie des commutateurs électroniques ou optoélectroniques, et la valeur maximale du produit Nx$\delta t$ est limitée par les phénomènes de dispersion électrique sur les lignes.

Dans le domaine des applications pour les lasers impulsionnels le principe des lignes hyperfréquences déposées sur substrat à faibles pertes et de grande longueur avait à l'origine été appliqué dans une configuration plus simple et non programmable. Cette configuration très simple consiste à exploiter sur une charge électrique fixe la variation d'amplitude des réflexions électriques en entrée d'une ligne unique, ligne dont l'impédance présente une valeur spatialement variable. Le profil d'impédance le long de cette ligne doit cependant être ajustée à la demande en fonction du profil d'impulsion électrique à générer. Ce dispositif est le plus simple, mais il ne fonctionne que pour des profils d'impulsion monotones (croissance ou décroissance monotone, en l'absence de changements de signes de pente). Par ailleurs, il n'est pas programmable et est relativement difficile à réaliser dans le contexte de gabarits de forme à réaliser de manière très précise. Les limites électroniques et électro-optiques citées ci-dessus, pour $\delta t$ minimale, sont toujours vraies.

Dans le domaine des plus basses résolutions temporelles, les fabricants d'équipements électroniques proposent des générateurs de formes arbitraires pour une gamme de résolutions $\delta t>1$ à quelques nanosecondes. Il s'agit d'équipements à dynamique élevée (D > quelques $10^2$) pour lesquels N peut prendre des valeurs excessivement élevées, mais intrinsèquement incompatibles avec des valeurs $\delta t$ dans la gamme picoseconde.

Dans le domaine des générateurs programmables de forme arbitraire en impulsions haute tension, des dispositifs également à base de lignes discrètes ou à rubans ont été proposées. Ils donnent accès à une gamme de valeurs $\delta t$=100 à 200 ps dans une gamme de valeurs $T_{fenêtre}$ de quelques nanosecondes à 10 ns, pour des impulsions électriques d'intensité crête égale à quelques kilovolts. Le principe de l'utilisation de photoconducteurs sur des lignes à rubans est actuellement le seul à être compatible avec des impulsions en haute tension et avec N = quelques dizaines à 100 échantillons pour des durées d'impulsion $T_{fenêtre}$ situées dans la gamme 10 ns. Ce type de système, s'il offre une grande dynamique (D>$10^3$), est cependant incompatible avec des valeurs $\delta t<100$ ps dans le domaine des impulsions de durée supérieures à 10 ns, les limites électroniques et électro-optiques citées ci-dessus s'appliquant toujours.

Dans le domaine des technologies dites «tout optiques» (voir par exemple le document B. Colombeau et al., "Shaping of short laser pulses by passive optical Fourier techniques", in Opt. Comm. 19, p. 201, 1976) dédiées à la mise en forme d'impulsions laser, des dispositifs basés sur l'utilisation d'une conversion et d'un mélange de fréquence permettent de réaliser des profils d'impulsions optiques dans la gamme $\delta t<1$ ps. Ces dispositifs donnent donc accès à des résolutions temporelles élevées, mais ils sont essentiellement adaptés aux impulsions de faible largeur (fenêtre typique 1 ps - 1 ns). Ils nécessitent au départ une impulsion courte de largeur spectrale déterminée, dont dépendent les performances de sortie. Le produit Nx$\delta t$ est relativement élevé, typiquement $10^3<N<10^4$ Ils nécessitent cependant des opérations de calibration critiques pour l'obtention d'un profil spécifié a priori et leur réalisation est très complexe, en termes de structure optique. Un autre exemple d'un générateur impulsionel est décrit dans le document WO01/80507.

L'invention concerne un système basé sur un concept simple, très flexible et susceptible d'intéresser une gamme de performances étendues. Il présente, dans le cadre de la génération de profils totalement arbitraires, le grand intérêt d'une extrême simplicité de programmation, à partir d'une séquence d'échantillons indépendants les uns des autres. Suivant le nombre d'échantillons souhaités, le domaine de résolutions temporelles peut recouvrir des valeurs de $\delta t$ situées entre quelques fractions de picosecondes (dans le domaine optique) à quelques picosecondes (dans le domaine électrique), jusqu'à plusieurs dizaines de nanosecondes, en conservant des valeurs de N et D simultanément très élevées. Ce concept est applicable à au moins deux configurations possibles :

- l'une, de type électro-optique, dans le domaine $\delta t$ supérieur à quelques picosecondes, est applicable aux fonctions de modulation de phase ou d'intensité optique, et d'intensité électrique. Cette configuration est réalisée sous forme complètement fibrée, donc très compacte et robuste. Sur le plan utilisateur, le fait qu'aucune opération d'alignement optique ne soit nécessaire contribue aussi à une grande simplicité de mise en oeuvre. Les performances du système selon l'invention sont particulièrement intéressantes notamment dans les domaines «électro-optique basse tension» et «tout optique».
- l'autre, de type purement optique, dans le domaine où $\delta t$ est supérieur à quelques fractions de picosecondes, est applicable aux besoins de modulation d'intensité optique. Par rapport au système de type électro-optique, seule la nature du modulateur de sortie change.

L'invention permet de pallier un certain nombre d'inconvénients relatés ci avant au niveau des autres dispositifs de mise en forme, tout en donnant accès à une combinaison de performances de sortie non encore atteintes dans les systèmes existants, à savoir :

- une résolution temporelle élevée (réduction de $\delta t$ d'un facteur 10 à 100 par rapport à celle des dispositifs électro-optiques connus) est combinée avec la possibilité de fonctionner avec un nombre d'échantillons très supérieur (N=$10^4$ à $10^5$ est une valeur minimale, ne posant en tout état de cause aucun problème technique). Qu'il s'agisse de l'option électro-optique ou de l'option tout optique, des valeurs de D supérieures à $10^3$ sont tout à fait réalistes,

- le caractère totalement programmable, à partir d'électroniques standard en basse fréquence (100 MHz typiquement), et l'usage de composants commerciaux de grande diffusion confère à l'invention un caractère économique et un degré de flexibilité et de simplicité maximums.

L'invention concerne donc un générateur impulsionnel de profils de phase et/ou d'intensité à très haute résolution comprenant une source optique émettant un premier train d'impulsions optiques selon une période (To) déterminée. Ce générateur comprend en outre :

- un premier modulateur de l'intensité des impulsions optiques émises par la source et qui émet au moins un deuxième train d'impulsions optiques modulées en intensité, les différentes impulsions étant modulées indépendamment les unes des autres à des niveaux d'intensité déterminés.
- un circuit optique ayant une longueur optique telle qu'une impulsion optique émise par la source le parcourt en un temps (τ) légèrement différent de la période (To) de la source.
- un premier coupleur optique actif commandable, possédant une première et une deuxième entrée ainsi qu'une première et une deuxième sortie. Ce coupleur reçoit le deuxième train d'impulsions optiques sur sa deuxième entrée. Il a sa deuxième sortie couplée à la première entrée par un circuit optique d'une longueur optique déterminée, et il fournit sur la première sortie un troisième train d'impulsions contenant autant d'impulsions que contient le deuxième train d'impulsions,
- un dispositif de commande permettant de commander le premier coupleur optique pour, selon une première commande, transmettre la lumière reçue sur ses deux entrées vers la deuxième sortie, et selon une deuxième commande, transmettre la lumière reçue sur sa première entrée vers la première sortie.

De préférence, la source optique est un laser à blocage de mode actif émettant un train d'impulsions périodiques.

Avantageusement, le premier modulateur est commandé par un signal électrique crénelé, la durée de chaque palier de ce signal étant égal à la période (To) de la source.

Selon une forme de réalisation de l'invention, le circuit optique a une longueur optique telle qu'une impulsion optique émise par la source le parcourt en un temps (τ) légèrement supérieur à la période (To) de la source.

De préférence, ledit circuit optique comporte une fibre optique monomode.

On pourra prévoir que le premier modulateur a un une durée de modulation (NTo) multiple de la période de la source. On pourra prévoir également que la première commande (K = 0) est déclenchée par le début d'une modulation par le premier modulateur et est arrêtée à la fin de cette modulation au temps de transit d'impulsions prêt entre ce premier modulateur et la deuxième entrée du premier coupleur. On pourra prévoir alors que la deuxième commande (K = 1) est déclenchée lorsque la première commande est arrêtée.

Avantageusement, un amplificateur est inséré dans le circuit optique.

Un deuxième coupleur optique dont une entrée est connectée à la première sortie du premier coupleur, répartit la lumière sur une première et une deuxième sortie. La lumière extraite sur la deuxième sortie est transmise à un circuit de détection optique lequel permet de commander ledit amplificateur.

Avantageusement, on prévoira, inséré en série dans ledit circuit optique, un premier réseau de Bragg permettant de réaliser une compensation des dispersions temporelles.

Selon une forme de réalisation, la première sortie du premier coupleur est couplée à un deuxième modulateur optique à base d'absorbant saturable résonant ou d'élément optique non linéaire (type effet Kerr par exemple) permettant de moduler en intensité un faisceau également incident sur ce deuxième modulateur.

Selon une autre forme de réalisation la première sortie du premier coupleur est couplée à un convertisseur électro-optique qui en échange d'impulsions optiques reçues, transmet des impulsions électriques.

Les impulsions électriques transmises par le convertisseur électro-optique seront appliquées à un modulateur électro-optique permettant ainsi de moduler, en phase ou en intensité, un faisceau lumineux incident sur ce modulateur électro-optique.

Avantageusement, il est prévu un deuxième réseau de Bragg situé entre la première sortie du premier coupleur et le modulateur ou le détecteur électro-optique.

Les différents objets et caractéristiques de l'invention apparaîtront plus clairement dans la description qui va suivre et dans les figures annexées qui représentent :

- la figure 1, une courbe explicative d'une impulsion déjà décrite précédemment,
- la figure 2, un schéma de base d'un exemple de réalisation d'un générateur tout optique selon l'invention,
- la figure 3, un chronogramme illustrant le fonctionnement du générateur impulsionnel représenté en figure 2,
- la figure 4, un schéma d'un exemple de réalisation d'un générateur électro-optique dérivé du générateur de la figure 2,
- la figure 5, un schéma d'un exemple de réalisation plus complet d'un générateur selon l'invention,

- la figure 6, une variante de réalisation du générateur selon l'invention

En se reportant à la figure 2, on va donc tout d'abord décrire un exemple de réalisation général du générateur selon l'invention.

Ce générateur comporte une source lumineuse 1 qui est, par exemple, une source laser à blocage de modes actif qui génère un peigne continu d'impulsions optiques ultracourtes de période To=1/Fo, dans une gamme de cadences Fo=50-100 MHz, usuelles pour ce type de source. L'activation et le blocage de la source laser sont gérés par un circuit de commande 10. Le diagramme D1 de la figure 2 représente un tel train d'impulsions.

Ces impulsions optiques sont transmises à un modulateur d'intensité 2 qui transmet les impulsions lumineuses modulées en intensité à une boucle de fibre optique monomode 3.

Le modulateur 2 module l'intensité optique des impulsions qu'il reçoit impulsion par impulsion. Pour cela, il est piloté par un circuit électronique 20 qui lui fournit un signal de commande C2 qui présente des créneaux de tensions d'amplitudes variables à la cadence de la source 1 à blocage de modes. Le circuit de commande 20 est donc synchronisé avec le circuit de commande 10 de la source laser. Le diagramme D2 de la figure 2 représente un tel signal de commande et le diagramme D3 représente un train d'impulsions modulées fourni par le modulateur 2. Le modulateur 2 et son circuit de commande 20 sont des circuits classiques.

Le modulateur est couplé à la fibre optique 3 par un coupleur optique 4 à deux entrées et deux sorties.

La boucle de fibre optique 3 est connectée entre la sortie D et l'entrée A du coupleur. Le modulateur 2 est couplé par une fibre optique à l'entrée B du coupleur de telle façon que les impulsions lumineuses émises par le modulateur 2 puissent être transférées sur la sortie D du coupleur. Le fonctionnement de ce coupleur sera décrit ultérieurement.

La boucle de fibre optique 3 présente un temps optique caractéristique $\tau$ (ou longueur optique de fibre) qui représente le temps mis par une impulsion pour parcourir la boucle de fibre. Cette boucle est utilisée dans un mode de fonctionnement particulier qui associe les fonctions d'«accumulateur d'échantillons» et de «compresseur d'échelle temporelle». Elle a pour rôle de multiplier par un facteur très élevé la fréquence initiale Fo d'émission des impulsions émises par la source 1 et modulées en intensité par le modulateur 2. Ce processus se fait en "empilant" progressivement les impulsions lumineuses les unes derrière les autres.

Pour cela, l'invention prévoit que le temps caractéristique $\tau$ de la boucle de fibre optique 3 et la fréquence Fo de la source à blocage de modes soient adaptées l'une à l'autre et notamment que le temps $\tau$ soit légèrement différent de la période To de la source 1 d'une quantité déterminée. Si $\tau$ est très légèrement inférieur à la période To = 1/Fo, une impulsion donnée incidente sur l'entrée B du coupleur 4 viendra se positionner à l'intérieur de la boucle 3, par couplage sur la sortie D du coupleur, juste derrière l'impulsion qui y était entrée au tour précédent et qui a déjà subi le retard de propagation lié à ce tour. Ainsi, l'intervalle de temps qui sépare ces deux impulsions est $\delta t = To - \tau$ et l'intervalle de temps To qui séparait deux impulsions successives fournies par le modulateur 2 a pris la valeur $\delta t$. Il est aussi possible de fonctionner «module T0». Pour que ce principe fonctionne, il est nécessaire que F0 et L soient parfaitement stabilisées tout au long de l'accumulation des impulsions dans la boucle.

Le taux de remplissage initial de valeur $\delta t \times Fo$, inférieur à $10^4$, peut être relevé aux alentours de 50%, selon la forme de l'impulsion élémentaire associée à chaque échantillon. Considérons en effet un temps d'ouverture de valeur donnée $T_{ouv} = N \times To = N/Fo$ au niveau du modulateur 2, ce dernier fonctionnant à l'extinction en dehors de la fenêtre de temps de valeur T0, et au départ une boucle sans aucune perte optique. Il est possible de fabriquer un train d'impulsions de durée $T_{fenêtre} \ll T_{ouv}$ et de périodicité $\delta t$ très courte devant 1/F0, en commutant la boucle après un certain temps.

Plus les dérives de la fréquence Fo de la source 1 et de la longueur L de la boucle de fibre 3 seront faibles (respectivement $\Delta Fo$ et $\Delta L$), et plus la durée ($\Delta to$) des impulsions fournies par la source à blocage de modes sera courte, plus $\delta t$ pourra être faible et on pourra obtenir une résolution temporelle du dispositif élevée. A la limite, pour $\Delta L = O$ et $\Delta Fo = 0$, on pourra fixer $\delta t \approx \delta t0$. La condition de calage optimum de notre dispositif est donc décrite par la relation suivante:

$$\mathrm{Fo} \; = \; 1/(\tau \; + \; \delta t)$$

Un train de N impulsions courtes accumulées dans la boucle 3 est extrait de la boucle 3 sous la commande d'un signal de commande K appliqué au coupleur 4 par le circuit électronique 30. Le diagramme D4 de la figure 2 représente un train d'impulsions fourni sur la sortie c du coupleur 4.

Ce train d'impulsions constitue une impulsion composite équivalente dont l'enveloppe présente la forme arbitraire définie par la suite des valeurs de tensions du signal C2 appliquées au modulateur 2. Cependant la durée de l'enveloppe de l'impulsion composite du diagramme D4 est beaucoup plus courte que celle du train d'impulsions du diagramme D3.

Selon ce procédé, le profil de l'impulsion composite à réaliser est échantillonné au pas $\delta t$ (résolution temporelle)

et chacun des échantillons de ce profil est défini par une valeur donnée de la séquence des créneaux électriques appliqués au modulateur 2. Les N échantillons sont définis indépendamment les uns des autres. Il suffit donc que le profil de l'impulsion composite corresponde à un profil d'impulsion spécifié à la demande pour que l'on ait réalisé un générateur de profils d'impulsions arbitraire à très haute résolution temporelle, programmable électriquement.

Par ailleurs, le système de la figure 2 comporte un amplificateur optique 5 inséré en série dans la boucle 3. En effet, le bon fonctionnement du système pour des valeurs de N élevées suppose en effet que le gain de boucle soit quasi unitaire, et qu'il n'y ait pas d'effets d'atténuation incontrôlée des impulsions à l'intérieur de la boucle pendant la durée NxTo. Le système de la figure 2 suppose que l'atténuation induite dans la boucle fibrée soit connue a priori et maîtrisée dans le temps, et que l'amplificateur 5 puisse avoir un gain net ajustable.

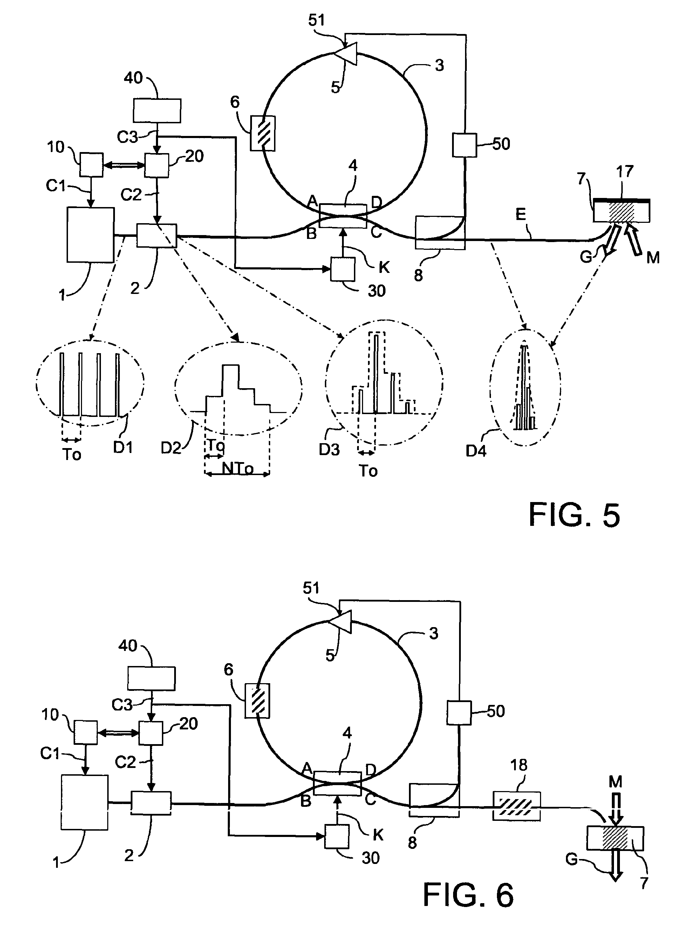

On pourra prévoir comme cela sera décrit en relation avec la figure 5, un dispositif électronique d'asservissement 50 du gain de boucle □ qui exploite, au cours d'une séquence intermédiaire non décrite ici dans ses détails, mais activée entre deux trains d'impulsions extraits de la boucle fibrée, le signal en sortie « prélèvement » du coupleur 8. La valeur du prélèvement est typiquement de quelques pourcents. Ce dispositif 50 génère une commande électrique 51, permettant l'asservissement de □.

L'asservissement permet ainsi de corriger des dérives du système. Cet asservissement peut être mis en oeuvre de manière identique, dans les schémas des figures 2, 4, 5 et 6. L'amplificateur fibré présente un gain $G \approx 1/\gamma$, sensiblement, et est isolé en entrée et en sortie. L'ajustement du gain de boucle peut aussi être réalisé, si la technologie de l'amplificateur impose que les variations qu'il est possible d'appliquer à G ne sont que des variations très lentes, par action sur un élément de couplage additionnel (non représenté sur les figures). Cet élément, de type électro-optique à pertes pouvant être activées plus rapidement, est placé à l'intérieur de l'amplificateur, en série dans sa sortie, et est activé par la commande électronique 51.

Il est également prévu, inséré en série dans la boucle 3, un réseau de Bragg 6. Ce réseau joue un rôle important dans le système de l'invention, car il doit minimiser la dispersion temporelle résiduelle sur un tour de boucle et ainsi permettre de conserver la finesse temporelle des impulsions fournies sur l'entrée B du coupleur. Le nombre N d'impulsions dans une impulsion composite tel que représentée par le diagramme D4 doit pouvoir atteindre des valeurs très élevées, par exemple $N=10^4$. Dans ces conditions, une impulsion entrant dans la boucle 3 par l'entrée B devra parcourir $10^4$ tours. La longueur de propagation totale d'une impulsion sera donc $L_{tot}=NxL$, L étant la longueur de la boucle. Par exemple pour L=2 m et $N=10^4$ on aura une longueur totale parcourue $L_{tot}=20Km$. En l'absence de ce réseau, la résolution $\delta t$ se dégraderait progressivement au cours du processus d'accumulation des échantillons et un compromis devrait être effectué en fonction de $\delta t$maximum et N. L'effet de compensation est exploité à chaque tour de boucle tout comme le gain apporté par l'amplificateur 5. Le réseau est de préférence réalisé avec un pas variable (« chirped » en terminologie anglo-saxonne), et est optimisé en fonction de l'ensemble des paramètres de l'ensemble «boucle et amplificateur».

On va maintenant décrire la commande du coupleur 4 permettant l'extraction de trains d'impulsions de la boucle 3. Le coupleur 4 est un composant actif qui peut être commuté de manière électrique (mais une commutation par commande optique est naturellement aussi possible).

Le quadripôle est donc un coupleur directionnel électro-optique à guides d'onde similaire à ceux utilisés pour les fonctions de multiplexage rapide utilisés dans les réseaux de télécommunications tel que le réseau DWDM décrit dans le document « DWDM , Networks, Devices and technology » de Kartalopoulos, Ed. Wiley-Interscience, 2003 p. 125-126. Ce type de coupleur est basé sur le principe du contrôle de l'interaction entre guides d'onde couplés longitudinalement par onde évanescente. Les temps de commutation des coupleurs directionnels électro-optiques étant précisément situés dans la gamme subnanoseconde, ce qui convient tout a fait à leur application dans le cadre de l'invention. Ces coupleurs présentent aussi les avantages d'une très haute isolation entre ports adjacents, d'une acceptance spectrale élevée et d'un faible facteur de bruit.

Le coupleur 4 est donc de type quadripôle possédant deux entrées A, B et 2 sorties C, D. Le quadripôle est piloté par un signal de commande K fourni par un circuit électronique 30 de telle façon que :

- pour K = 0, les signaux optiques incidents sur les 2 entrées A et B sont transmis sur la sortie D vers la boucle de fibre 3,
- pour K = 1, l'entrée A est couplée à la sortie C et le transfert de l'entrée A vers la sortie D est inhibé ; les impulsions lumineuses qui sont entrées dans la boucle 3 sont extraites vers la sortie C du coupleur.

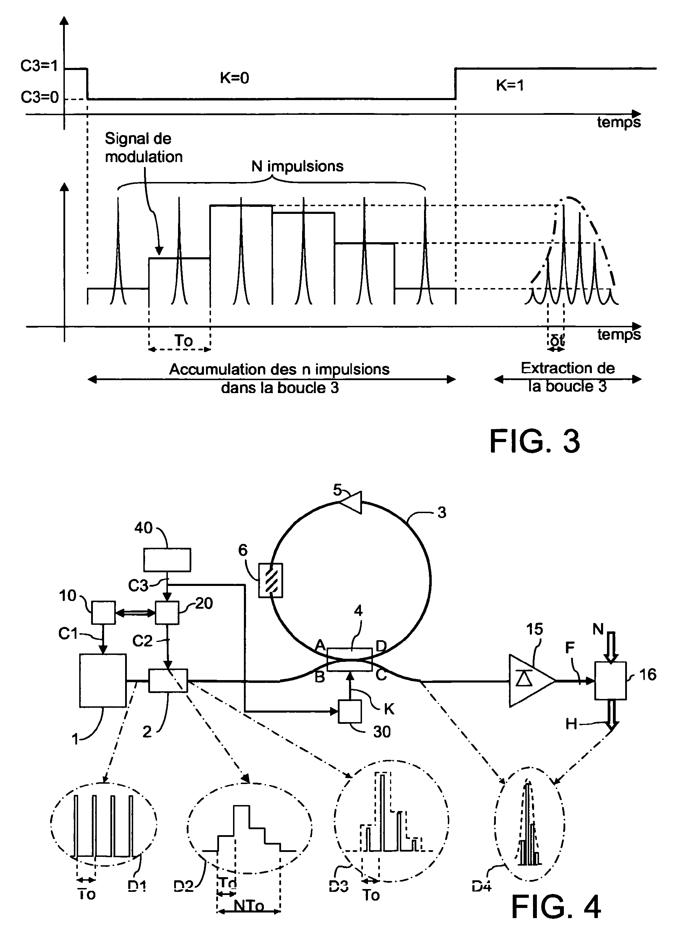

Un circuit de commande central 40 émet, comme cela est représenté en figure 3, un signal de commande C3=0 qui commande le fonctionnement du circuit 20 qui fournit un signal de modulation C2 au modulateur 2 (voir figure 3). Le signal de modulation C2 permet la modulation des différentes impulsions qui arrivent de la source 1. Parallèlement, le signal C3=0 commande le circuit 30 qui fournit un signal K=0 au coupleur 4, lequel couple l'entrée B du coupleur à sa sortie D et couple également l'entrée A à la sortie D. Les impulsions modulées sont introduites dans la boucle 3.

Lorsque le circuit de commande 40 fournit un signal C3=1, le circuit 20 commande l'arrêt de la modulation dans le modulateur 2 et le circuit 30 fournit un signal K=1 au coupleur qui couple l'entrée A du coupleur à la sortie C. Les impulsions qui ont été introduites dans la boucle 3 en sont extraites par la sortie C du coupleur sous la forme d'un train d'impulsions très proches les unes des autres tel que représenté sur la partie droite du chronogramme de la figure 3.

Ce train d'impulsions est appliqué à un modulateur optique 7 qui recevant un faisceau optique à moduler M fournit un faisceau optique modulé G. Le modulateur 7 est par exemple un dispositif absorbant saturable à semiconducteur et notamment par exemple un dispositif résonant à puits quantiques. Ce dispositif peut aussi être, en cas de contraste limité au niveau de la saturation de l'absorption, de type différentiel.

Dans le principe de fonctionnement du modulateur optique à absorbant saturable (ou à autre élément optique non linéaire), le faisceau émis par la fibre E et le faisceau M à moduler ne sont pas incidents de façon colinéaire sur la face d'entrée du dispositif 7. Le décalage angulaire décalage angulaire peut être compris entre 10 et 45 degrés typiquement. Le taux de transmission de l'absorbant saturable est modulé en fonction de l'intensité fournie par la fibre E. La calibration globale du dispositif doit tenir compte de la forme de la caractéristique de transfert de l'absorbant.

Selon une variante de réalisation représentée en figure 5, le dispositif 7 peut fonctionner en réflexion. Dans ce cas, la face opposée à la face d'incidence du faisceau issu de la fibre E et du faisceau M est réfléchissante. Elle comporte, par exemple, une couche réfléchissante 17. Le fonctionnement de cette configuration en réflexion est similaire est similaire à la configuration fonctionnant en transmission avec une efficacité doublée en raison du double passage dans l'épaisseur de l'absorbant.

La modulation se fait par action sur la transmission de l'absorbant saturable du modulateur 7. Dans ce cas, l'intensité crête dans l'impulsion qui éclaire l'absorbant est ajustée en fonction de la caractéristique de transfert de l'absorbant. Le calage de cette intensité crête à la valeur correspondant au blanchiment total de l'absorbant permet de minimiser la réduction de dynamique due à la fonction de transfert optique non linéaire.

La figure 4 représente une variante de réalisation dans laquelle la sortie C du coupleur est reliée par fibre optique à un convertisseur 15 ultra rapide qui, en échange d'un train d'impulsions optiques qu'il reçoit, fournit en F, un train d'impulsions électriques. Ce signal électrique est appliqué à un modulateur électro-optique 16 qui permet de moduler un faisceau N pour fournir un faisceau H modulé en amplitude (intensité) ou en phase. Le modulateur électro-optique 16 peut être un dispositif à effet Pockels qui converti un champ électrique en une variation d'indice du matériau. Sur une longueur donnée, ce matériau donne une modulation de phase. En introduisant ce dispositif dans un interféromètre de Mach Zehnder on obtient un modulateur d'intensité optique.

La figure 5 représente un exemple de réalisation plus complet du générateur impulsionnel de l'invention. Ce système possède un asservissement de l'amplificateur 5 en fonction d'un signal détecté sur la sortie C du coupleur.

Un coupleur 8 est connecté à la sortie C du coupleur 4 et permet de prélever une faible partie (quelques pourcents par exemple) du signal sortant du coupleur par la sortie C. Le maintien d'un gain unitaire en présence de pertes optiques (propagation sur la fibre et coupleur 4), qui par surcroît peuvent dériver au cours du temps, nécessite un asservissement électronique du gain G de l'amplificateur 5 à partir d'un prélèvement réalisé sur le signal émis sur la sortie C. Le signal optique prélevé est transmis à l'électronique d'asservissement 50 qui en échange fournit un signal électrique 51 qui permet de commander l'amplificateur 5.

Ainsi, le gain de boucle est maintenu quasi unitaire sur un nombre très élevé de tours de boucle dans les limites liées à la saturation de l'amplificateur. Pour des pertes faibles, ce qui est le cas dans les fibres monomodes, la valeur de G est peu élevée (inférieure à 10 dB). L'amplificateur est réalisable dans une technologie classique et peu onéreuse, avec un facteur de bruit faible (typiquement 4 à 5 dB avec les technologies actuelles).

Les limites ultimes en termes de dynamique en intensité (D) seront définies par ce même facteur de bruit, le bruit optoélectronique provenant de la source à blocage de modes, la dynamique d'amplitude accessible avec le modulateur 2 ($10^4$ à $10^5$ est une valeur classique dans la gamme des fréquences Fo), ainsi que, pour les impulsions électriques, la contribution du convertisseur optique-électrique rapide en sortie.

Deux caractéristiques intéressantes sur le plan utilisateur sont à remarquer, pour justifier de la simplicité de mise en oeuvre :

- les N échantillons successifs sont définis indépendamment les uns des autres, en séquence,
- la programmation des N valeurs est réalisée de manière linéaire, intrinsèquement. Aucune correction de non linéarité n'est nécessaire tant que l'amplificateur de la boucle ne sature pas.

La production d'impulsions électriques est réalisée par simple conversion optique-électrique derrière une photodiode amplifiée à large bande passante. Les bandes classiques actuelles sont les suivantes : DC à 10 - 40 - 60 GHz.

La figure 6 représente une variante de réalisation du générateur de l'invention permettant une modulation d'intensité optique directe à la longueur d'onde de la source à blocage de modes. Un deuxième réseau de Bragg 18 est inséré entre les points C et E de pour induire une dispersion optique permettant de lisser convenablement l'impulsion mise en forme. Le taux d'ondulation résiduelle sur l'enveloppe est alors réduit au niveau requis. L'optimisation des performances de mise en forme des profils d'impulsions pose en effet le problème très général de la définition du taux d'ondulation autour de l'enveloppe, phénomène inhérent au principe d'échantillonnage. Il convient de définir le lissage à réaliser dans la fenêtre de durée Nxδt. La gamme des valeurs actuelles accessibles est : δt=quelques fractions de ps,

$N=10^4$ à $10^5$ typiquement et $D>10^3$.

Dans le cas du système de la figure 4 concernant un système électro-optique et permettant une modulation d'intensité électrique indirecte en sortie du modulateur ultrarapide 16, au point F, la réponse impulsionnelle limitée du modulateur réalise naturellement une fonction de lissage temporel et le second réseau de Bragg n'est pas indispensable.

Au point H, une modulation de phase optique à la longueur d'onde d'un faisceau optique externe, indirecte, via un modulateur 16 de phase électro-optique. Ce modulateur 16 peut être un composant ultrarapide issu des développements pour les télécommunications, dans la bande 40 - 100 GHz. La gamme des valeurs actuelles accessibles est : $\delta t \approx 3$ ps, $N>10^5$ typiquement et $D > 10^2$.

Par ailleurs on peut prévoir un "lissage" de l'impulsion composite obtenue. Celle-ci est lissée autour de l'enveloppe programmée à partir des valeurs spécifiées V(t) en entrée du modulateur 1 par filtrage temporel. Le rôle du lissage est de réduire l'amplitude des modulations résultantes en sortie, sans trop dégrader les temps de montée et de descente de l'enveloppe. Un filtrage peut être réalisé :

- de manière intrinsèque, au niveau de l'impulsion optique,
- par l'ajustement des effets de dispersion produits par le réseau de Bragg dans la boucle fibrée,
- ou bien par filtrage électronique dans le cas de la génération d'une impulsion électrique.

Dans la description qui précède on a essentiellement considéré la génération d'impulsions otiques, mais le générateur de l'invention est également applicable à la génération d'impulsions électriques en prélevant les impulsions, par exemple, au point F de la figure 4.

L'invention est applicable à tous domaines susceptibles de faire intervenir des besoins de mise en forme temporelle sur des impulsions. Les impulsions peuvent, indifféremment, présenter des taux de répétition faibles ou relativement élevés. La limite au taux de répétition maximum admissible dans notre dispositif étant donnée par Fo.δt et la limite de saturation du gain de l'amplificateur, les moyens à disposition pour accroître ce taux incluent :

- la réduction de To avec une source à blocage de modes de cadence supérieure. Ceci est tout à fait possible, puisque de nombreux travaux sont en cours dans le domaine du développement de ce type de sources pour Fo = 1 à 10 GHz.
- la réduction de L avec le remplacement de l'amplificateur fibré par un amplificateur à guide d'onde sur semi-conducteur, de longueur optique très inférieure.

Les impulsions à mettre en forme peuvent être de nature optique ou électrique.

Pour l'application de l'invention au domaine des hautes tensions on peut envisager de:

- soit coupler directement la sortie du convertisseur à une cascade d'amplificateurs, dont la technologie actuelle est limitative dans une gamme de fréquences analogiques 0 à quelques GHz,
- soit amplifier de manière optique le train d'impulsions fourni à la sortie C dans une configuration à établir à partir des technologies existantes dans le domaine laser, puis d'utiliser l'enveloppe ainsi amplifiée pour la commutation d'un photoconducteur polarisé sous une haute tension continue.

De nombreux autres domaines d'application sont également envisageables, entre autres dans le domaine des lasers. Un exemple, dans lequel l'invention présente un intérêt fondamental, est celui des lasers de la classe PW pour la physique des hautes énergies. Dans ce domaine, la fourniture de la puissance crête maximale sera directement conditionnée par la capacité du pilote de l'installation à pré-compenser les défauts des dispositifs de l'allongement temporel en tête de chaîne, et de l'amplification de puissance. La possibilité de recomprimer dans le temps minimum toute l'énergie amplifiée dans une chaîne PW sera aisément évaluable et mise en oeuvre avec l'invention, compte tenu des besoins simultanés :

- d'une très forte résolution temporelle, dans la gamme 1 à 10 ps,
- d'un très grand nombre de points dans la gamme $T_{fenêtre}=5$ à 10 ns,
- d'une flexibilité maximale et de la possibilité de programmer le profil par voie informatique.

**Revendications**

1. Générateur impulsionnel de profils de phase et/ou d'intensité à très haute résolution comprenant une source optique (1) émettant un premier train d'impulsions optiques selon une période (To) déterminée, **caractérisé en ce qu'**il comporte également :

- un premier modulateur (2) de l'intensité des impulsions optiques émises par la source et émettant au moins un deuxième train d'impulsions optiques modulées en intensité, les différentes impulsions étant modulées indépendamment les unes des autres à des niveaux d'intensité déterminés,

- un circuit optique (3) ayant une longueur optique telle qu'une impulsion optique émise par la source le parcourt en un temps ($\tau$) légèrement différent de la période (To) de la source,

- un premier coupleur optique (4) actif commandable, possédant une première et une deuxième entrée (A et B) ainsi qu'une première et une deuxième sortie (C et D), ce coupleur recevant ledit deuxième train d'impulsions optiques sur sa deuxième entrées (B), ayant sa deuxième sortie (D) couplée à la première entrée (A) par un circuit optique (3) d'une longueur optique déterminée, et fournissant sur la première sortie (C) un troisième train d'impulsions contenant autant d'impulsions que contenues dans le deuxième train d'impulsions,

- un dispositif de commande (30) permettant de commander le premier coupleur optique (4) pour, selon une première commande (K = 0), transmettre la lumière reçue sur ses deux entrées (A, B) vers la deuxième sortie (D), et selon une deuxième commande (K = 1), transmettre la lumière reçue sur sa première entrée (A) vers la première sortie (C).

2. Générateur selon la revendication 1 **caractérisé en ce que** la source optique (1) est un laser à blocage de mode actif émettant un train d'impulsions périodiques.

3. Générateur impulsionnel selon la revendication 1, **caractérisé en ce que** le premier modulateur (2) est commandé par un signal électrique crénelé, la durée de chaque palier de ce signal étant égale à la période (To) de la source (1).

4. Générateur impulsionnel selon la revendication 1, **caractérisé en ce que** le circuit optique (3) a une longueur optique telle qu'une impulsion optique émise par la source le parcourt en un temps ($\tau$) légèrement supérieur à la période (To) de la source.

5. Générateur impulsionnel selon la revendication 1, **caractérisé en ce que** ledit circuit optique (3) comporte une fibre optique monomode.

6. Générateur impulsionnel selon la revendication 1, **caractérisé en ce que** le premier modulateur (2) a une durée de modulation (NTo) multiple de la période de la source (1), **en ce que** la première commande (K = 0) est déclenchée par le début d'une modulation par le premier modulateur et est arrêtée à la fin de cette modulation au temps de transit d'impulsions prêt entre ce premier modulateur et la deuxième entrée (B) du premier coupleur (4), et **en ce que** la deuxième commande (K = 1) est déclenchée lorsque la première commande est arrêtée.

7. Générateur impulsionnel selon la revendication 5, **caractérisé en ce qu'**il comporte un amplificateur (5) inséré dans le circuit optique.

8. Générateur impulsionnel selon la revendication 1, **caractérisé en ce qu'**il comporte un deuxième coupleur optique (8) dont une entrée est connectée à la première sortie du premier coupleur (4), et répartissant la lumière sur une première et une deuxième sortie, la lumière extraite sur la deuxième sortie étant transmise à un circuit de détection optique lequel permet de commande ledit amplificateur (5).

9. Générateur impulsionnel selon la revendication 5, **caractérisé en ce que** le circuit optique comporte, inséré en série, un premier réseau de Bragg (6) permettant de réaliser une compensation des dispersions temporelles.

10. Générateur impulsionnel selon l'une des revendications 1 ou 8, **caractérisé en ce que** la première sortie (C) du premier coupleur (4) est couplée à un deuxième modulateur à base d'absorbant saturable résonant ou d'élément optique non linéaire permettant de moduler un faisceau (M) également incident sur ce deuxième modulateur (7).

11. Générateur impulsionnel selon l'une revendications 1 ou 8, **caractérisé en ce que** la première sortie (C) du premier coupleur (4) est couplée à un convertisseur électro-optique (15) qui en échange d'impulsions optiques reçues, transmet des impulsions électriques.

12. Générateur impulsionnel selon la revendication 11, **caractérisé en ce que** les impulsions électriques transmises par le convertisseur électro-optique (15) sont appliquées à un modulateur électro-optique (16) permettant ainsi de moduler, en phase ou en intensité, un faisceau lumineux incident sur ce modulateur électro-optique (16).

13. Générateur impulsionnel selon l'une des revendications 9 ou 11, **caractérisé en ce qu'**il comporte un deuxième réseau de Bragg (18) situé entre la première sortie (C) du premier coupleur (4) et le modulateur (7) ou le détecteur électro-optique (15).

## Claims

1. Pulse generator of very high resolution phase and/or intensity profiles, comprising an optical source (1) emitting a first train of optical pulses according to a determined period (To), **characterized in that** it also includes:

   - a first modulator (2) modulating the intensity of the optical pulses emitted by the source, and emitting at least a second train of intensity-modulated optical pulses, the different pulses being modulated independently of each other at determined intensity levels,
   - an optical circuit (3) having an optical length such that an optical pulse emitted by the source travels along it in a time (τ) slightly different to the period (To) of the source,
   - a first, active, commandable optical coupler (4) having a first and second input (A and B) and a first and second output (C et D), this coupler receiving said second train of optical pulses on its second input (B), having its second output (D) coupled to the first input (A) via an optical circuit (3) of determined optical length, and delivering on the first output (C) a third pulse train containing as many pulses as contained in the second pulse train,
   - a command device (30) to allow commanding of the first optical coupler (4) so that, according to a first command (K = 0), it transmits the light received on its two inputs (A, B) towards the second output (D) and, according to a second command (K = 1), it transmits the light received on its first input (A) towards the first output (C).

2. Generator according to claim 1, **characterized in that** the optical source (1) is an active mode-locking laser emitting a train of periodic pulses.

3. Pulse generator according to claim 1, **characterized in that** the first modulator (2) is commanded by a modulating electric signal, the duration of each level of this signal being equal to the period (To) of the source (1).

4. Pulse generator according to claim 1, **characterized in that** the optical circuit (3) has an optical length such that an optical pulse emitted by the source travels along it in a time (τ) slightly longer than the period (To) of the source.

5. Pulse generator according to claim 1, **characterized in that** said optical circuit (3) comprises a single-mode optical fibre.

6. Pulse generator as in claim 1, **characterized in that** the first modulator (2) has a duration of modulation (NTo) that is a multiple of the period of the source (1), **in that** the first command (K = 0) is triggered by the start of a modulation by the first modulator and is stopped at the end of this modulation, close to the pulse transit time between this first modulator and the second input (B) of the first coupler, and **in that** the second command (K =1) is triggered when the first command is stopped.

7. Pulse generator according to claim 5, **characterized in that** it comprises an amplifier (5) inserted in the optical circuit.

8. Pulse generator according to claim 1, **characterized in that** it comprises a second optical coupler (8) of which one input is connected to the first output of the first coupler (4), and distributing the light on a first and second output, the light extracted on the second output being transmitted to an optical detection circuit which enables commanding of said amplifier (5).

9. Pulse generator according to claim 5, **characterized in that** the optical circuit comprises a first Bragg grating (6), inserted in series, to achieve compensation of temporal dispersions.

10. Pulse generator according to either of claims 1 or 8, **characterized in that** the first output (C) of the first coupler(4) is coupled to a second modulator with resonant saturable absorbent, or with a non-linear optical element allowing modulation of a beam (M) also incident on this second modulator (7).

11. Pulse generator according to either of claims 1 or 8, **characterized in that** the first output (C) of the first coupler(4) is coupled to an electro-optical converter (15) which, in exchange for received optical pulses, transmits electric pulses.

12. Pulse generator according to claim 11, **characterized in that** the electric pulses transmitted by the electro-optical converter (15) are applied to an electro-optical modulator(16), thereby making it possible to modulate, in phase or intensity, a light beam incident on this electro-optical modulator (16).

13. Pulse generator according to either of claims 9 or 11, **characterized in that** it comprises a second Bragg grating (18) positioned between the first output (C) of the first coupler(4) and the modulator (7) or electro-optical detector (15).

**Patentansprüche**

1. Phasenprofil- und/oder Höchstauflösungsintensitätsgenerator, eine optische Quelle (1) umfassend, die einen ersten Zug optischer Impulse gemäß einer bestimmten Periode (To) emittiert, **dadurch gekennzeichnet, dass** er auch umfasst:

   - einen ersten Intensitätsmodulator (2) der durch die Quelle emittierten Impulse, der wenigstens einen zweiten Zug intensitätsmodulierter optischer Impulse emittiert, wobei die verschiedenen Impulse unabhängig voneinander mit bestimmten Intensitätspegeln moduliert sind,
   - eine optische Schleife (3) mit einer solchen optischen Länge, dass ein durch die Quelle emittierter optischer Impuls sie in einer Zeit (τ) durchläuft, die sich leicht von der Periode (To) der Quelle unterscheidet,
   - einen ersten aktiv steuerbaren optischen Koppler (4), der einen ersten und zweiten Eingang (A und B) sowie einen ersten und zweiten Ausgang (C und D) umfasst, wobei dieser Koppler auf seinem zweiten Eingang (B) den genannten zweiten optischen Impulszug empfängt, wobei sein zweiter Eingang (D) durch eine optische Schleife (3) mit einer bestimmten optischen Länge mit dem ersten Eingang (A) gekoppelt ist, und auf dem ersten Ausgang (C) einen dritten Impulszug liefert, der ebenso viele Impulse enthält, wie in dem zweiten Impulszug enthalten sind,
   - eine Steuervorrichtung (30) zur Steuerung des ersten optischen Kopplers (4), um gemäß einem ersten Befehl (K = 0) das an seinen beiden Eingängen (A, B) empfangene Licht zum zweiten Ausgang (D) zu senden, und gemäß einem zweiten Befehl (K = 1) das an seinem ersten Eingang (A) empfangene Licht zum ersten Ausgang (C) zu senden.

2. Generator nach Anspruch 1, **dadurch gekennzeichnet, dass** die optische Quelle (1) ein einen Zug periodischer Impulse emittierender Laser mit Aktivmodensperre ist.

3. Impulsgenerator nach Anspruch 1, **dadurch gekennzeichnet, dass** der erste Modulator (2) durch ein elektrisches Sägezahnsignal gesteuert wird, wobei die Dauer jedes Plateaus dieses Signals gleich der Periode (To) der Quelle (1) ist.

4. Impulsgenerator nach Anspruch 1, **dadurch gekennzeichnet, dass** die optische Schleife (3) eine solche optische Länge hat, dass ein durch die Quelle emittierter Impuls sie in einer Zeit (τ) durchläuft, die etwas länger ist als die Periode (To) der Quelle.

5. Impulsgenerator nach Anspruch 1, **dadurch gekennzeichnet, dass** die optische Schleife (3) eine optische Monomodefaser umfasst.

6. Impulsgenerator nach Anspruch 1, **dadurch gekennzeichnet, dass** die Modulationsdauer (NTo) des ersten Modulators (2) ein Vielfaches der Periode der Quelle (1) ist, dass der erste Befehl (K = 0) durch den Anfang einer Modulation durch den ersten Modulator ausgelöst wird und am Ende dieser Modulation zum Zeitpunkt des Impulstransits zwischen diesem ersten Modulator und dem zweiten Eingang (B) des ersten Kopplers (4) beendet wird, und dadurch, dass der zweite Befehl (K = 1) ausgelöst wird, wenn der erste Befehl beendet wird.

7. Impulsgenerator nach Anspruch 5, **dadurch gekennzeichnet, dass** er einen in die optische Schleife integrierten Verstärker (5) umfasst.

8. Impulsgenerator nach Anspruch 1, **dadurch gekennzeichnet, dass** er einen zweiten optischen Koppler (8) umfasst, von dem ein Eingang mit dem ersten Ausgang des ersten Kopplers (4) verbunden ist, der das Licht auf einen ersten und einen zweiten Ausgang verteilt, wobei das aus dem zweiten Ausgang austretende Licht zu einer optischen Detektionsschaltung übertragen wird, die ermöglicht, den genannten Verstärker (5) zu steuern.

9. Impulsgenerator nach Anspruch 5, **dadurch gekennzeichnet, dass** die optische Schleife ein in Serie integriertes erstes Bragg-Gitter (6) umfasst, das eine Kompensation der zeitlichen Streuungen ermöglicht.

**10.** Impulsgenerator nach einem der Anspruche 1 oder 8, **dadurch gekennzeichnet, dass** der erste Ausgang (C) des ersten Kopplers (4) gekoppelt ist mit einem zweiten Modulator auf der Basis eines sättigbaren Resonanzabsorptionsmediums oder nichtlinearen optischen Elements, das ermöglicht, einen ebenfalls in diesen einfallenden Strahl (M) zu modulieren.

**11.** Impulsgenerator nach einem der Anspruche 1 oder 8, **dadurch gekennzeichnet, dass** der erste Ausgang (C) des ersten Kopplers (4) gekoppelt ist mit einem elektrooptischen Konverter (15), der als Gegenleistung für empfangene optische Impulse elektrische Impulse weitergibt.

**12.** Impulsgenerator nach Anspruch 11, **dadurch gekennzeichnet, dass** die durch den elektrooptischen Konverter (15) weitergegebenen elektrischen Impulse in einen elektrooptischen Konverter (16) eingespeist werden, was ermöglicht, einen in diesen optoelektrischen Modulator (16) einfallenden Lichtstrahl einer Phasen- und/oder Intensitätsmodulation zu unterziehen.

**13.** Impulsgenerator nach einem der Anspruche 9 oder 11, **dadurch gekennzeichnet, dass** er ein zweites Bragg-Gitter (18) umfasst, eingebaut zwischen dem ersten Ausgang (C) des ersten Kopplers (4) und dem Modulator (7) oder dem optoelektrischen Detektor (15).

Intensité ou niveau

P maximum

Echantillon Ni

P {
pour
$D = P_{max}/P$

$T_{fenêtre} = N. \ t$

temps

Temps de
montée

t

## FIG. 1

40

C3

10

20

C1

C2

6

5

3

4

A    D

B    C

E    M

K

30

1

2

G

7

D1

To

D2    To
NTo

D3
To

D4

## FIG. 2

## FIG. 3

## FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•   WO 0180507 A

**Littérature non-brevet citée dans la description**

•   **S.C. BURKHART et al.** National Ignition Facility Front end Laser System. *Solid State Lasers for Application to Inertial Confinement Fusion Conference,* 31 Mai 1995, 48

•   **COLOMBEAU et al.** Shaping of short laser pulses by passive optical Fourier techniques. *Opt. Comm,* 1976, vol. 19, 201
•   DWDM , Networks, Devices and technology. Wiley-Interscience, 2003, 125-126